# EUROPEAN PATENT APPLICATION

(11) **EP 4 524 903 A1**
(43) Date of publication of application: **19.03.2025**
(21) Application number: 23197609.3
(22) Date of filing: 15.09.2023
(51) Int. Cl.: G06V 10/82, G06V 10/98, G06V 20/56

(54) **A METHOD FOR DETERMINING AN UNCERTAINTY OF A PERCEPTION OF SURROUNDINGS OF A VEHICLE FROM A DETECTION DEVICE, COMPUTER PROGRAM PRODUCT, COMPUTER-READABLE STORAGE MEDIUM, AS WELL AS DETECTION DEVICE**

(71) Applicant: Siemens Aktiengesellschaft, 80333 München (DE)
(72) Inventor: Neumann, Felix, 85386 Eching (DE); Deroo, Frederik, 85399 Hallbergmoos (DE)
(74) Representative: Siemens Patent Attorneys

(57) **Abstract**

The invention relates to a method for determining an uncertainty (14) of a perception of surroundings (16) of a vehicle (18) from a detection device (12) by the detection device (12), comprising the steps of: capturing at least two consecutive frames (22, 24) of the detection device (12) by a sensor element (20) of the detection device (12); estimating a scene flow (26) between the at least two consecutive frames (22, 24) by at least one artificial intelligence (28) of an electronic computing device (10) of the detection device (12); determining a cost volume (42, 44, 46) of the estimated scene flow (26) by the electronic computing device (10); and determining the uncertainty (14) as variances matrices and/or covariance matrices of a distribution over at least one cost volume (42, 44, 46) by the electronic computing device (10). Furthermore, the invention relates to a computer program product, a computer-readable storage medium, as well as to a detection device (12).

## Description

The present invention relates to a method for determining an uncertainty of a perception of surroundings of a vehicle from a detection device by the detection device. Furthermore, the present invention relates to a corresponding computer program product, a corresponding computer-readable storage medium, as well as a corresponding detection device.

In particular, the following problem is related to perception systems for autonomous vehicles and robotic systems in real world applications. Examples of such systems are driverless trains, autonomous guided vehicles, or robotic arms. The goal of a perception system/detection system/detection device is to provide understanding about the environment such that the system can operate safely and collision-free.

The "perception system" focuses on a three-dimensional scene flow estimation using artificial intelligences. Three-dimensional scene flow models the pixel-wise three-dimensional structure and dynamics of the environment and can be used by subsequent systems to check objects and avoid collisions.

Learned artificial intelligence-based approaches to this have shown strong performance but are inherently unreliable in unseen data domains. Furthermore, for safe operation, a perception system needs to reason about uncertainties to detect cases where an operation can not proceed safely. The technical problem addressed in this invention is the task of learning both scene flow and respective the uncertainty.

This far the problem has been approached by self-supervised and supervised learning approaches. Supervised learning uses annotated data to show the network the desired output for a given input. Self-supervised learning approaches can learn from unlabeled data by predicting what the observed sensor data should be at different time steps and then comparing to the actual measurement. However, no prior approach estimates and calibrates uncertainty for either the supervised or self-supervised case. Prior art is furthermore limited to fixed sensor configurations of either a monocular or a stereo camera.

It is an object of the present invention to provide a method, a corresponding computer program product, a corresponding computer-readable storage medium, as well as corresponding a detection device, by which an uncertainty of the perception of the detection device can be determined in an improved manner.

This object is solved by a method, a corresponding computer program product, a corresponding computer-readable storage medium, as well as to a corresponding detection device.

One aspect of the invention relates to a method for determining an uncertainty of a perception of surroundings of a vehicle from a detection device by the detection device. At least two consecutive frames of the detection device are captured by a sensor element of the detection device. A scene flow between the at least two consecutive frames is estimated by at least one artificial intelligence of an electronic computing device of the detection device. At least one cost volume of the estimated scene flow is determined by the electronic computing device. The uncertainty is determined as variances matrices and/or covariance matrices of a distribution over at least one the cost volume by the electronic computing device.

Therefore, uncertainties of a scene flow are provided as full covariance matrices which enables the detection device to accurately reason about uncertain and potentially dangerous input domains, where no confident estimation can be provided. Prior art has only done this using a scalar value for depth or optical flow, and never for a scene flow. The scene flow and respective uncertainties can be learned from both labeled and unlabeled data to deploy new systems rapidly in new environments. This saves the cost of generating labels for the training data. Prior art is not able to learn uncertainty aware scene flow with no labels. Furthermore, since the same artificial intelligence parameters are used for each scene flow subtask, less memory is required to store and run the perception system. Furthermore, this reduces the amount of training data that is needed to train the artificial intelligence.

In particular, estimating both the three-dimensional structure and the three-dimensional dynamics of a scene is an important task for a vehicle, in particular for at least in part autonomous motor vehicles or fully autonomous motor vehicles and robotic systems. Deep learning-based methods have shown strong performance on this problem, but are only reliable on the training domain and often do not reason about uncertainty. To address this issue, an uncertainty aware multi-task artificial intelligence totally estimates relative camera poses, disparity, optical flow, monocular depth and three-dimensional scene flow from either monocular or stereo image pairs in a single model with shared weights for all tasks. Uncertainties are estimated as variance and covariance matrices from the cost volume of each respective task and are propagated analytically through the artificial intelligence.

In particular the artificial intelligence may be configured as a neural network. The neural network may be a classification network and/or a regression network. For example the neural network may be a convolutional neural network.

According to an embodiment the detection device is provided as a camera. Alternatively, the detection device can be provided as a radar sensor or a lidar sensor, providing three-dimensional information about the surroundings. Therefore, the method can be used in different vehicles, for example at least in part autonomous motor vehicles, fully autonomous motor vehicles or robots, such as autonomous guided vehicles.

According to another embodiment the detection device is provided as a monocular camera. A monocular camera is a very easy configured camera, and often used and already applied on vehicles. Therefore, the monocular camera as detection device can be used highly flexibly in already built vehicles.

In another embodiment the detection device is provided as a stereo camera. Therefore, an easy way for capturing depth information about the surroundings is provided. This provides a good determination of the uncertainty by the detection device.

In another embodiment depending on a determined threshold value for the uncertainty an operation signal for a functional device of the vehicle is generated. For example, if the uncertainty is higher a predefined threshold, the operation signal can be generated. For example, an assistance system of the vehicle may get the operation signal, that information depending on the detection device may be rejected because of a bad detection of surroundings. Therefore, for example the assistance system may use other detection devices for analyzing the surroundings. Furthermore, it is possible, that depending on the uncertainty, for example a safe state of the vehicle may be reached, for example the vehicle may be stopped because of a high uncertainty.

In another embodiment a pixel-wise uncertainty of the frames is provided. In particular, the uncertainty determined from the cost volumes can be propagated to the output of the artificial intelligence analytically to attain the pixel-wise uncertainty estimation. This provides a high credibility of the detection system, for example for an assistance system, of the vehicle.

In another embodiment an uncertainty corresponding to an optical flow in the frames and/or to a depth in the frames and/or to a disparity in the frames is determined. In particular, the scene flow can be divided into the sub tasks of optical flow and depth or disparity estimation. The detection device is now able to estimate depth, disparity or optical flow with the same artificial intelligence of the learned parameters. This allows the detection device to improve the accuracy of for example, disparity estimation by learning from labeled optical flow data.

In another embodiment depending on the determined uncertainty, the frames are transmitted to an external electronic computing device for training an initial artificial intelligence. For example, the artificial intelligence can be provided by the external electronic computing device, wherein external means external to the vehicle. For example, the external electronic computing device may be configured as a server, in particular a cloud server. Unlabeled frames with, for example, high observed uncertainties can be transmitted to the external electronic computing device and used for a further training of the artificial intelligence provided by the external electronic computing device. The current trained artificial intelligence can then be transmitted back to the vehicle/detection device and therefore can be used in future for the perception task. Therefore, the artificial intelligence can be trained and in future a more accurate detection device can be provided.

In another embodiment the trained initial artificial intelligence is transmitted to the vehicle and/or the detection device. Therefore, the vehicle may receive a current artificial intelligence, and therefore the perception can be performed in an improved manner.

According to another embodiment the perception is used for an obstacle avoidance of the vehicle. In particular, as already mentioned, the vehicle may be an at least in part autonomous motor vehicle or a fully autonomous motor vehicle. In particular, an obstacle avoidance may be performed by using the detection device. For example, the vehicle can be guided around the obstacles, in particular to avoid a collision with the obstacle.

In another embodiment additionally a detection device pose estimation is considered for determining the uncertainty. In particular, a camera pose estimation is considered for determining the uncertainty. To construct the cost volume for monocular depth estimation, however, there is a need to estimate the iterative camera transformation between temporarily adjacent frames to sample correspondence along epipolar lines. Therefore, the method can also be used for a monocular camera by using the estimated pose of the camera.

According to another embodiment the artificial intelligence is trained by an unsupervised learning algorithm or a supervised learning algorithm. For example, a self-supervised learning may be performed. Therefore, different learning algorithms can be used for the artificial intelligence. Therefore, the method is highly flexible usable for different artificial intelligences.

In particular, the method is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the present invention relates to a detection device for determining an uncertainty of a perception of surroundings of a vehicle from a detection device, comprising at least one sensor element and one electronic computing device, wherein the detection device is configured for performing a method according to the preceding aspect. In particular, the method is performed by the detection device.

Furthermore, the invention relates to a vehicle comprising at least the detection device. The vehicle may be configured as an at least in part autonomous motor vehicle, a fully autonomous motor vehicle, or a robot.

Advantageous embodiments of the method are to be regarded as advantageous embodiments of the computer program product, the computer-readable storage medium, the detection device, as well as the vehicle.

The detection device as well as the vehicle comprises means for performing the method according to the preceding aspect.

The detection device may be used for an assistance system/electronic vehicle guidance system. An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the environment traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated April 2021.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

The at least one control signal may for example be provided to one or more actuators of the motor vehicle, including for example one or more braking actuators and/or one or more steering actuators and/or one or more propulsion motors of the motor vehicle. The one or more actuators may affect a longitudinal and/or lateral control of the motor vehicle in order to guide the motor vehicle at least in part automatically.

The assistance information may be output by means of an output device of the motor vehicle, for example a display and/or an audio output system and/or a haptic output system.

The artificial intelligence may be configured as a neural network. An artificial neural network can be understood as a software code or a compilation of several software code components, wherein the software code may comprise several software modules for different functions, for example one or more encoder modules and one or more decoder modules.

An artificial neural network can be understood as a nonlinear model or algorithm that maps an input to an output, wherein the input is given by an input feature vector or an input sequence and the output may be an output category for a classification task or a predicted sequence.

For example, the artificial neural network may be provided in a computer-readable way, for example, stored on a storage medium of the vehicle, in particular of the at least one computing unit.

The artificial intelligence comprises several modules including the encoder module and the at least one decoder module. These modules may be understood as software modules or respective parts of the artificial intelligence. A software module may be understood as software code functionally connected and combined to a unit. A software module may comprise or implement several processing steps and/or data structures.

The modules may, in particular, represent artificial intelligences or sub-networks themselves. If not stated otherwise, a module of the artificial intelligence may be understood as a trainable and, in particular, trained module of the artificial intelligence. For example, the artificial intelligence and thus all of its trainable modules may be trained in an end-to-end fashion before the method is carried out. However, in other implementations, different modules may be trained or pre-trained individually. In other words, the method according to the invention corresponds to a deployment phase of the artificial intelligence.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The detection device may be used in an environmental sensor system. For example, the environmental sensor system can be understood as a sensor system, which is able to generate sensor data or sensor signals, which depict, represent or image an environment of the environmental sensor system. In particular, the ability to capture or detect electromagnetic or other signals from the environment, cannot be considered a sufficient condition for qualifying a sensor system as an environmental sensor system. For example, cameras, lidar systems, radar systems or ultrasonic sensor systems may be considered as environmental sensor systems.

Computer vision algorithms, which may also be denoted as machine vision algorithms or algorithms for automatic visual perception, may be considered as computer algorithms for performing a visual perception task automatically. A visual perception task, also denoted as computer vision task, may for example be understood as a task for extracting visual information from image data. In particular, the visual perception task may in several cases be performed by a human in principle, who is able to visually perceive an image corresponding to the image data. In the present context, however, visual perception tasks are performed automatically without requiring the support by a human.

For example, a computer vision algorithm may be understood as an image processing algorithm or an algorithm for image analysis, which is trained using machine learning and may for example be based on an artificial artificial intelligence, in particular a convolutional artificial intelligence.

For example, the computer vision algorithm may include an object detection algorithm, an obstacle detection algorithm, an object tracking algorithm, a classification algorithm, a segmentation algorithm, and/or a depth estimation algorithm.

Corresponding algorithms may analogously be performed based on input data other than images visually perceivable by a human. For example, point clouds or images of infrared cameras et cetera may also be analyzed by means of correspondingly adapted computer algorithms. Strictly speaking, however, the corresponding algorithms are not visual perception algorithms since the corresponding sensors may operate in domains, which are not perceivable by the human eye, such as the infrared range. Therefore, here and in the following, such algorithms are denoted as perception or automatic perception algorithms. Perception algorithms therefore include visual perception algorithms, but are not restricted to them with respect to a human perception. Consequently, a perception algorithm according to this understanding may be considered as computer algorithm for performing a perception task automatically, for example, by using an algorithm for sensor data analysis or processing sensor data, which may, for example, be trained using machine learning and may, for example, be based on an artificial neural network. Also the generalized perception algorithms may include object detection algorithms, object tracking algorithms, classification algorithms and/or segmentation algorithms, such as semantic segmentation algorithms.

In case an artificial neural network intelligence is used to implement a visual perception algorithm, a commonly used architecture is a convolutional artificial intelligence, CNN. In particular, a 2D-CNN may be applied to respective 2D-camera images. Also for other perception algorithms, CNNs may be used. For example, 3D-CNNs, 2D-CNNs or 1D-CNNs may be applied to point clouds depending on the spatial dimensions of the point cloud and the details of processing.

The output of a perception algorithm depends on the specific underlying perception task. For example, an output of an object detection algorithm may include one or more bounding boxes defining a spatial location and, optionally, orientation of one or more respective objects in the environment and/or corresponding object classes for the one or more objects. An output of a semantic segmentation algorithm applied to a camera image may include a pixel level class for each pixel of the camera image. Analogously, an output of a semantic segmentation algorithm applied to a point cloud may include a corresponding point level class for each of the points. The pixel level classes or point level classes may, for example, define a type of object the respective pixel or point belongs to.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the inventions may comprise features or combinations of features, which are not recited in the claims.

The figures show in:
FIG 1 a schematic block diagram according to an embodiment of an electronic computing device of a detection device; and
FIG 2 a schematic block diagram of a detection system for a vehicle.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

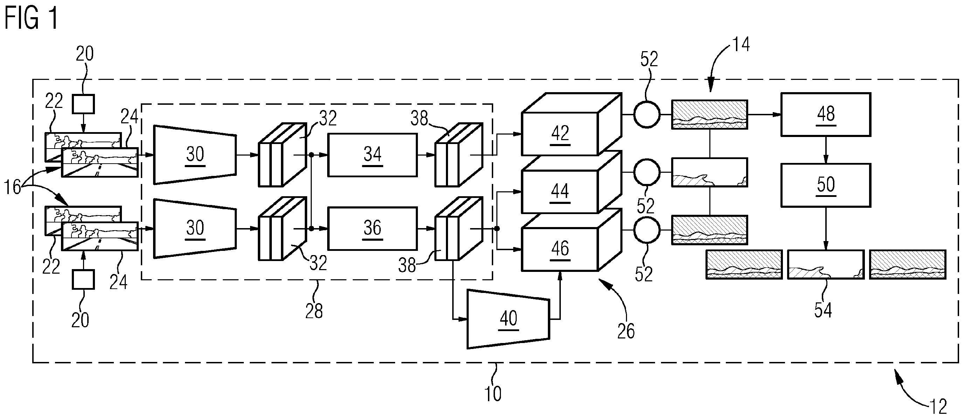

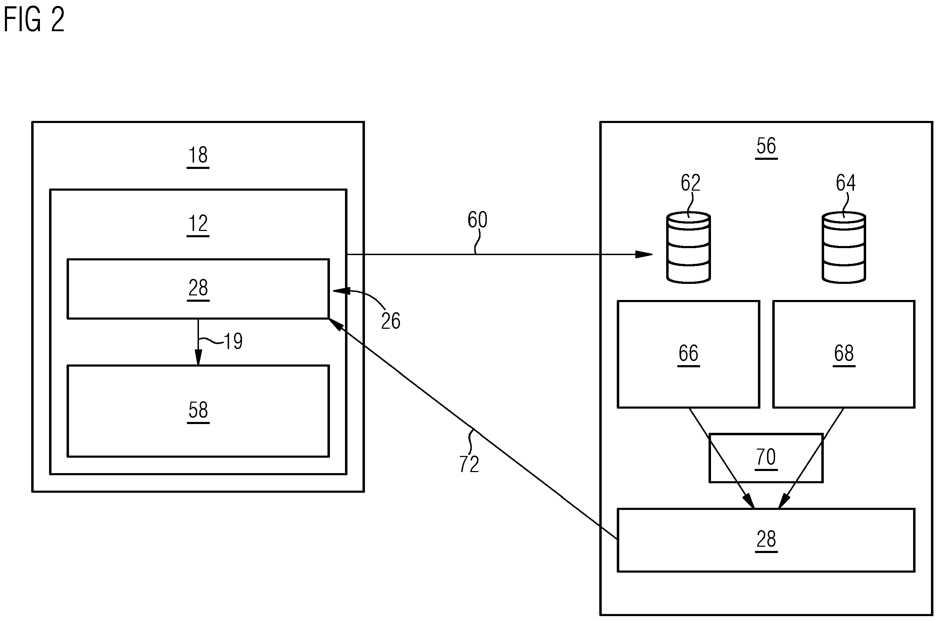

FIG 1 shows a schematic block diagram according to an embodiment of an electronic computing device 10 of a detection device 12. The detection device 12 is for determining an uncertainty 14 of a perception of surroundings 16 of a vehicle 18 (FIG 2) from the detection device 12 comprising at least one sensor element 20 and the electronic computing device 10.

In particular FIG 1 shows a pipeline for a provided method. FIG 1 shows, that two consecutive frames 22, 24 were captured by the sensor element 20 of the detection device 12. A scene flow 26 is estimated in the at least two consecutive frames 22, 24 by at least one artificial intelligence 28 of the electronic computing device 10.

In particular FIG 1 shows, that the artificial intelligence 28 may comprise at least one, according to the embodiment two RGB encoder 30, first layers 32, a stereovision transformer 34, a temporal vision transformer 36, and second layers 38. Furthermore, a pose decoder 40, a disparity cost calculator 42, a flow cost calculator 44 and a depth cost calculator 46 are shown. Furthermore, a self-attention propagation 48 as well as a convex up sampling 50 is provided.

In particular, FIG 1 shows further, that a cost volume 44, 46, 48 of the estimated scene flow 26 is determined by the electronic computing device 10 and the uncertainty 14 is determined as a variance matrices and/or a covariance matrices of a distribution over the cost volume 44, 46, 48 by the electronic computing device 10.

In particular FIG 1 shows an overview of the electronic computing device 10, in particular of the network structure. An image feature extraction is expanded to include information from both temporarily and special adjacent frames 22, 24 using cross attention in the vision transformers 34, 36.

Furthermore, a pose estimation is based on the features output from the multi-image transformer, which is similar to the pose estimation. Up to three cost volumes 44, 46, 48 are constructed, one for the optical flow, disparity and depth matching respectively. From each of these cost volumes 44, 46, 48 initial predictions are extracted, for example Gaussian distributions 52. These initial estimates are then propagated through the self-attention propagation 48 and convex up sampling layer to produce a final pixel-wise output 54.

FIG 2 shows another schematic block diagram according to an embodiment of a detection system comprising at least the vehicle 18 and the detection device 12 as well as an external electronic computing device 56. In particular FIG 2 shows, that the scene flow 26 and in particular the artificial intelligence 28 can be used for an assistance system 58, in particular for an obstacle avoidance system of the vehicle 18.

FIG 2 shows further, that from the detection system 12 unlabeled data 60 may be transmitted to the external electronic computing device 56, which may also be regarded to a training infrastructure. The external electronic computing device 56 may comprise a database 62 for unlabeled data and a further database 64 for labeled data. Unlabeled data 66 as well as labeled data 68 may be used for a training 70 for the artificial intelligence 28. The new trained artificial intelligence 28 may be transmitted as an updated artificial intelligence, in particular as updated network parameters 72, back to the detection device 12.

In particular FIG 2 shows the estimation of uncertainties 14 as covariances from the cost volume 42, 44, 46. In particular, a new way for estimating uncertainties 40 for the corresponding task calculates the uncertainties 14 as variances and covariance matrices of a distribution over a cost volume 42, 44, 46. This is different from prior art, that predicted scalar uncertainties directly as learned output. This method of calculating uncertainties 14 reflects the network confidence more accurately and is more robust to domain changes. The calculated uncertainties 14 may furthermore be propagated to the network output analytically to attain pixel-wise uncertainty estimation.

Another step shown in FIG 2 is the parameter efficient multi-task perception system. The scene flow 26 can be divided into the subtask of the optical flow, and depth and disparity estimation. The novelty in this method is that the depth, disparity, or optical flow can all be estimated by the same network with the same set of learned parameters. This allows the detection device 12 to improve the accuracy of, for example, disparity estimation by learning from labeled optical flow data. Furthermore, this allows the detection device 12 to be operated using both a monocular camera as the detection device 12 or a stereo camera as detection device 12, as the same network parameters can be used for monocular depth and disparity estimation.

## Claims

1. A method for determining an uncertainty (14) of a perception of surroundings (16) of a vehicle (18) from a detection device (12) by the detection device (12), comprising the steps of:
- capturing at least two consecutive frames (22, 24) of the detection device (12) by a sensor element (20) of the detection device (12);
- estimating a scene flow (26) between the at least two consecutive frames (22, 24) by at least one artificial intelligence (28) of an electronic computing device (10) of the detection device (12);
- determining at least one cost volume (42, 44, 46) of the estimated scene flow (26) by the electronic computing device (10); and
- determining the uncertainty (14) as a variances matrices and/or covariance matrices over at least one cost volume (42, 44, 46) of a distribution over the cost volume (42, 44, 46) by the electronic computing device (10).

2. A method according to claim 1, **characterized in that** the detection device (12) is provided as a camera.

3. A method according to claim 2, **characterized in that** the detection device (12) is provided as a monocular camera.

4. A method according to claim 2, **characterized in that** the detection device (12) is provided as a stereo camera.

5. A method according to any one of claims 1 to 4,
**characterized in that**
depending on a determined threshold value for the uncertainty (14) an operation signal for a functional device of the vehicle (18) is generated.

6. A method according to any one of claims 1 to 5,
**characterized in that**
a pixel-wise uncertainty (14) of the frames (22, 24) is provided.

7. A method according to any one of claims 1 to 6,
**characterized in that**
an uncertainty (14) corresponding to an optical flow in the frames (22, 24) and/or to a depth in the frames (22, 24) and/or to a disparity in the frames (22, 24) is determined.

8. A method according to any one of claims 1 to 7,
**characterized in that**
depending on the determined uncertainty (14) the frames (22, 24) are transmitted to an external electronic computing device (56) for training (70) an initial artificial intelligence (28).

9. A method according to claim 8, **characterized in that** the trained initial artificial intelligence (28) is transmitted to the vehicle (18) and/or the detection device (12) .

10. A method according to any one of claims 1 to 9,
**characterized in that**
the perception is used for an obstacle avoidance of the vehicle (18).

11. A method according to any one of claims 1 to 10,
**characterized in that**
additionally a detection device pose estimation is considered for determining the uncertainty (14).

12. A method according to any one of claims 1 to 11,
**characterized in that**
the artificial intelligence (28) is trained by an unsupervised learning algorithm or a supervised learning algorithm.

13. A computer program product comprising program code means for performing a method according to any one of claims 1 to 12.

14. A computer-readable storage medium comprising at least the computer program product according to claim 13.

15. A detection device (12) for determining an uncertainty (14) of a perception of surroundings (16) of a vehicle (18) from a detection device (12), comprising at least one sensor element (20) and one electronic computing device (10), wherein the detection device (12) is configured for performing a method according to any one of claims 1 to 12.
